(19) **Europäisches Patentamt**
**European Patent Office**
**Office européen des brevets**

(11) **EP 1 894 470 A1**

(12) **EUROPEAN PATENT APPLICATION**

(43) Date of publication:
**05.03.2008   Bulletin 2008/10**

(51) Int Cl.:
*A23C 9/15* *(2006.01)*     *A23C 21/06* *(2006.01)*
*A23C 21/04* *(2006.01)*     *A23C 11/00* *(2006.01)*

(21) Application number: **06018499.1**

(22) Date of filing: **04.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **LACT INNOVATION APS**
**DK-6000 Kolding (DK)**

(72) Inventor: **Andersen, Kim Toft**
**6000 Kolding (DK)**

(74) Representative: **Medenwaldt, Robin et al**
**Patrade A/S**
**Fredens Torv 3A**
**DK-8000 Aarhus C (DK)**

(54) **Use of high lactose, high pH whey in the preparation of milk products**

(57)    The present invention relates to the use of of liquid high lactose, high pH whey as an ingredient in the standardisation of a dairy product; and a process for the manufacture of a dairy product comprising the steps: a) obtaining liquid high lactose, high pH whey, in particular from the coagulation of casein in milk; and b) admixing the high lactose, high pH whey obtained in step a) with one or more ingredients comprising: vegetable fat(s), animal fat(s), vegetable protein(s),animal protein(s) and natural or artificial sweetener(s), such as natural or artificial sugar(s), fruit and fruit juice. The use and the proc- ess according to the invention accordingly enables a more direct utilization of the valuable constituents of whey obtained from cheese production. The dairy prod- ucts obtainable by the process has a lower ratio casein: whey proteins, compared to traditionally dairy products.

**Fig. 1 - Types of whey depending on method of manufacture**

## Description

### Field of the Invention

The present invention relates to the use of high lactose, high pH whey in preparation of milk products. Furthermore, the present invention relates a process for the manufacture of a dairy product using high lactose, high pH whey. Furthermore, the present invention relates to a dairy product in the form of a milk product obtainable according to the process according to the invention, and the use of such a dairy for the manufacture of a further processed dairy product, and such further processed dairy product per se.

### Background of the Invention

Milk for consumption by humans has for decades been produced in dairies as so-called standardised milk. The process for producing standardised milk involves fractionating the raw milk into a cream fraction and a skim milk fraction. Usually, the fractionation is performed by centrifuging the raw milk, whereby the lighter cream fraction can be collected in the centre of the centrifuge, whereas the more dense, skim milk fraction can be collected near the periphery of the rotating part of the centrifuge. The standardised milk is obtained by adding a fraction of the separated cream to the skim milk. Alternatively, standardised milk may be obtained by batch-wise mixing pasteurised raw milk with skim milk. By varying the amount of cream or raw milk added to the skim milk a varieties of milk types may be obtained. Typical milk varieties used for consumption by humans are: whole milk (approximately 3.5 % fat), semi-skimmed milk (approximately 1.5 - 1.8 % fat) and skimmed milk (approximately 0.1 % fat).

Furthermore, standardised milk is used in the production of various cheese products. Typically milk for cheese production has a fat content of 0 - 5 %.

In recent years an increasingly number of people have become aware of the health risks involved in consuming food products having a high fat content. This has led to an increasing demand of low fat milk products. As a consequence, the dairies have in recent years experienced an over-production of cream origination from the fractionation of raw milk.

As mentioned above, standardised milk is also used for cheese production. In the process of making cheese, the main object is to precipitate the protein casein which is present in milk. This precipitation is performed by adding rennet or other milk coagulating enzyme and/or acid forming bacterial starter cultures, or alternatively the coagulation may be effected by adding acid. A side product obtained in cheese production is whey, which is an aqueous material comprising inter alia proteins other than casein, lactose, salts, minerals, vitamins and fat.

Traditionally, whey has been considered a waste product, which has been used for feeding animals or which has been discarded. In recent years however, an increasing number of countries have provided legislation which forbids discarding the whey without prior treatment so as to lower its COD and/or BOD. For this reason technologies enabling concentration by ion exchange, evaporation and/or membrane fractionation of the whey into its separate constituents, such as lactose, amino acids and whey proteins have been developed. These technologies has to some extent increased the value of whey. However, despite this development, whey is still considered a low cost product. The price of untreated whey delivered from a dairy typically amounts to € 0.02 per litre. As a contrast, the price of whole milk delivered by a dairy typically amounts to € 0.25 - 0.50 per litre, and the price of cheese delivered by a dairy typically amounts to € 2.5 - 3 per kg (approximately 10 litres of milk is required for the production of 1 kg cheese).

In the literature, whey obtained from cheese production is often distinguished as being either sweet whey or acidic whey. This distinction refers to the pH at the time on which the whey is separated off and thus relates to the type of cheese being produced. Sweet whey is obtained in cheese making processes in which an acid forming bacteria and/or an enzyme is used as curdling agent. Accordingly, at the time of curdling in such a process, the whey that is left behind upon curdling is sweet in the sense that it is has a relatively high pH and in the sense that essentially no fermentation of the lactose has occurred yet. However, upon standing the so-called sweet whey will turn acidic within a couple of hours due to the fermentation process performed by the acid forming bacteria which ferment the lactose into lactic acid. Accordingly, the so-called sweet whey will upon standing turn acidic in the sense that its pH-value is lowered. Furthermore, upon standing such sweet whey looses its sweetness imparted by the presence of the lactose due to the fermentation of the latter. On the other hand, acid whey is obtained in cheese making processes in which an acid is used as the sole curdling agent. This type of whey is acidic in terms of the pH at the time on which the whey is separated off. Due to the non-presence of any acid forming bacteria in the acid whey, the whey obtained from such processes retains its lactose content. Hence, compared to sweet whey, in respect of the lactose content, the acid whey does not alter its composition upon standing.

Due to the acidic character of the whey obtained from traditionally cheeses making processes, the whey is essentially useless for any direct application in the food industry except for the purification and fractionation processes set out above. This is especially true in case of the common practise of making a series of cheese batches in which the whey which is separated off in respect of the different batches is pooled in large tanks and stored at 20 - 40 degrees Celcius. As mentioned above, a few hours of time is sufficient for the acid forming bacteria present in the separated sweet whey to lower the pH of the whey and render the whey acidic. Hence, the whey situated in a pooling tank and originating from the cheese production of one working shift truly is acidic.

Recently, the Applicant has developed an alternative and ingenious cheese making process. The process is described in the European patent EP 1 278 426. This process involves the steps of : (i) adding a curdling agent to a cheese milk; (ii) carrying out conventional cheese curd preparing steps, including draining off the whey in order to obtain a cheese curd; (iii) adding to the resulting cheese curd of step (ii) a lactic acid bacterial starter culture, in order to give the resulting cheese its specific characteristics, including its specific flavour, and keeping the cheese curd resulting from step (iii) under ripening conditions to obtain the cheese.

The process disclosed in EP 1 278 426 has the advantage that the specific acid forming bacterial culture which gives the cheese its specific characteristics is added after obtaining the curd, implying that a dairy making a range of different cheese types can use the same processing line in respect of the different cheese types up to and including the step of obtaining the cheese curd. Only thereafter, the process steps differ with respect to the different cheese types. Obviously, this process simplifies the processing line in a dairy.

It has been found when employing the process according to the invention disclosed in EP 1 278 426 in a case in which the curdling agent added to the cheese milk is a substance that does not add any acidic characteristics to the cheese curd, such as in case of swiss type cheeses, mozzarella, cheddar, continental yellow type cheeses, mould cheeses, white cheeses, high lactose, high pH whey is obtained as a side product. This whey may be unfermented in the sense that as a consequence of the fact that no acid forming bacteria have been supplied to the milk prior to the step of separating off whey, no fermentation of the lactose have taking or will take place (provided that no other detrimental bacteria are present). Therefore, no change in the lactose content of the whey will take place over time, meaning that the content of lactose in this unfermented sweet remains essentially constant upon standing. Hence, such unfermented sweet whey has a relatively high pH and a relatively high content of lactose.

Rarely, the cheese producing dairy possesses the equipment necessary for turning whey into its valuable constituents, such as inter alia expensive driers, vacuum evaporators and membrane filtration units. Instead, the whey - which constituent is mostly water - is transported to facilities located elsewhere for further processing. All in all the transportation of the whey as well as the removal of the water in the whey amount to a gigantic energy consumption and this energy consumption obviously represent stresses on the world's $CO_2$ balance. Furthermore, the process of turning whey into its constituents is time consuming and the cleaning of the equipment used additionally requires use of cleaning agents and water, which imposes environmental problems.

A few attempts have been made for providing a method of using whey in food products. US 3 642 493 discloses a simulated milk product comprising vegetable protein, vegetable oil and sweet whey. The vegetable protein is preferably obtained from soy bean. However, also proteins from peanut seeds, sesame seeds, sunflower seeds, flax seeds and cotton seeds may be used. It is necessary to subject the raw, defatted protein material to a complicated process involving inter alia a special physico-thermo-vapour flash treatment in order to flash off odiferous, obnoxious, pungent chemical components from the protein material and in order to impart high redispersibility of the resulting protein in water. The vegetable oil used in the composition may be selected from soy oil, corn oil, coconut oil, safflower oil. The whey may be used in a dry powdery state or may comprise sweet whey as directly obtained from a dairy. The method of making the simulated milk product also comprises complicated process steps involving inter alia blending the treated vegetable protein ingredient with the fat and mixing both with an aqueous suspension of sweet whey, and adjusting the pH and subject the resulting mixture to severe homogenisation. Although this document discloses a method for producing a simulated milk product it does not disclose the use of whey for the standardisation of dairy products. The invention according to US 3 642 493 suffers from the disadvantage that complicated processing steps are necessary in order to make the protein ingredient acceptable for the use in the intended product.

US 4 397 927 relates to an imitation milk composition in the form of a powder made from sweet whey solids, soluble casein salt, sugar or artificial sweetener and animal fat or a combination of animal fat and vegetable fats. The imitation milk composition consists essentially of 40 to 60 percent by weight sweet whey solids, 4 to 10 percent by weight of a water-soluble casein salt, 10 to 40 percent by weight of an added sugar, 0.5 to 35 percent by weight of an edible animal fat or a mixture of edible animal and vegetable fats, and 0 to 35 percent by weight of non-fat dry milk solids. In order to mask the objectionable flavour of whey it is necessary to include casein salt in a ratio of casein salt:whey proteins in the range of 0.8:1 to 1.2:1. The method of US 4 397 927 suffers from the disadvantage that the whey has to be used in a dried state.]

It can be concluded that whether a cheese producing dairy decides to dispose off the whey produced by discarding it or by processing it into whey powder, huge amounts of resources are involved. In the former case, many country's legislations require that the whey is pretreated in order to lower the whey's COD and BOD. In the latter case, the process of turning the liquid whey into whey powder is highly energi demanding. Furthermore, the use of the whey powder in food product nomally requies that the powder is mixed with water and heated. Hence, the process of reusing whey as whey powder, not only requires energy in turning whey into powder and subsequently turning the whey powder into product, but also imposes stressed on the water ressoruces in that water (which was originally present in the whey) must be added in order to obtain the product which contains the whey powder.

In view of the above disadvantages involved in the prior art uses of whey there exists a need for a more direct use of liquid whey for the manufacture of dairy products.

Object of the Invention

It is the object of the present invention to provide a more direct use of liquid whey in the dairy industry. It is a further object to provide a process for the direct use of whey for the manufacture of dairy products. It is still further objects of the present invention to provide such a product and to use such product for the further processing into other dairy products.

**Description of the Invention**

These objects are fulfilled according to the present invention, which :

In a first aspect relates to the use of liquid high lactose, high pH whey as an ingredient in the standardisation of a dairy product.

In a second aspect relates to a process for the manufacture of a dairy product comprising the steps:

a) obtaining liquid high lactose, high pH whey, in particular from the coagu lation of casein in milk;

b) admixing the high lactose, high pH whey obtained in step a) with one or more ingredients comprising: vegetable fat(s), animal fat(s), vegetable prote in(s), animal protein(s) and natural or artificial sweetener(s), such as natural or artificial sugar(s).

In a third aspect relates to a dairy product in the form of a milk product obtainable according to the process according to the invention, wherein the content of casein in relation to the total amount of proteins present is reduced in relation to conventionally and/or traditionally milk products.

In a fourth and fifth aspect relates to the use of such a dairy for the manufacture of a further processed dairy product, and such further process dairy product.

**Description of the Drawing**

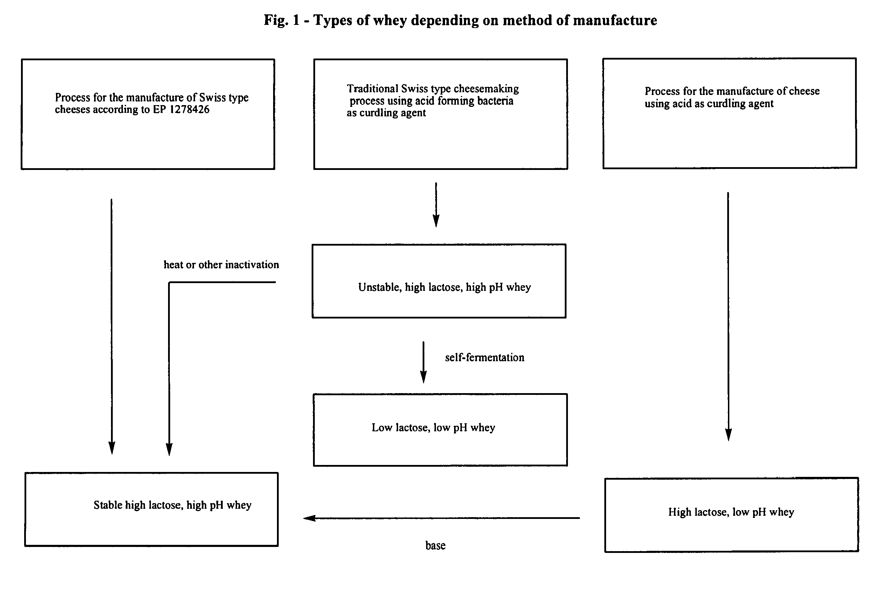

Fig. 1 illustrates the characteristics of the whey obtained depending on the cheese manufacturing process involved.

**Detailed Description of the Invention**

In the present application and the appended claims, the following definition of terms is used:

The term "milk" is to be interpreted as milk originating from any milk producing mammal, said milk being conventionally used in dairies for the production of dairy products. Accordingly, the term "milk" comprises milk originating from e.g. a cow, a goat, a sheep, a yak, a (water) buffalo, or a camel. Milk from a cow, a goat or a buffalo is preferred.

The term "sweet whey" is to be interpreted as whey originating from precipitation of casein from milk by using rennet or other milk coagulating enzyme and/or acid forming bacterial starter cultures as curdling agent. Sweet whey has a relatively high content of lactose and a relatively high pH immediately after separation of the curd, but may upon standing lower its pH and its content of lactose, if fermentation of the lactose into lactic acid is allowed to happen (i.e. if the activity of the acid forming bacteria is not eliminated).

The term "high lactose, high pH whey" is in the present application and the appended claims used to denote whey in which fermentation has not fermented essentially all the lactose present.

The term "low lactose, low pH whey" is in the present application and the appended claims used to denote whey in which essentially all the lactose has been fermented.

The term "unfermented sweet whey" is to be interpreted as high lactose, high pH whey in which essentially no fermentation of the lactose has taking place. This feature is provided either by obtaining the whey without the use of acid forming bacteria as curdling agent or - if such bacteria are used as curdling agent - by deactivating said bacteria immediately after obtaining the whey.

The term "acid whey" is to be interpreted as whey originating from precipitation of casein from milk by using acid as curdling agent. Acid whey has a relatively low pH and a relatively high content of lactose. In the present application and the appended claims the term "high lactose, low pH whey" is also used to denote this type of whey. Acid whey may be converted into high lactose, high pH whey in the form of unfermented sweet whey by pH adjusting acid whey with a base.

In the present description and in the appended claims, the term "dairy product" is to be interpreted as any kind of product comprising whey proteins.

The term "whey proteins" is to be interpreted as the proteins present in milk other than casein.

In the present description and in the appended claims, the term "liquid whey" is to be interpreted as the liquid material obtained by precipitating casein from milk. "Liquid whey" may be either non-concentrated or it may be concentrated in various degrees as long as it remains liquid.

In the present description and in the appended claims, the term "standardising a dairy product" is to be interpreted as adjusting inter alia fat content and/or protein content and/or lactose content and/or water content of a dairy product by admixing components each contributing fat and/or protein and/or lactose and/or water to the product.

It appears from the above sections that high lactose, high pH whey may be considered as being either stable or unstable. High lactose, high pH whey may be stable in the sense that it can be stored for days without any significant alteration in the pH and lactose content. In contrast, unstable high lactose, high pH whey is unstable in the sense that upon standing its pH and lactose content will drop to a value rendering it inappropriate for use in the present invention. Hence, in the present description and the appended claims the terms "stable, unfermented sweet whey" and "stable, high lactose, high pH whey" are used. The same applies in respect of the terms "unstable, unfermented sweet whey" and "unstable, high lactose, high pH whey".

Obtaining the high lactose, high pH whey

The present invention relates to the use of high lactose, high pH whey as an ingredient in the standardisation of a dairy product.

The key issue in the uses and processes according to the present invention is to use a whey quality that does not impart any detrimental properties to the product. Accordingly, if the amount of whey to be used is small compared to the total amount of ingredients it is usually possible to use high lactose, high pH whey having a lower pH than in the case in which the amount of whey to be used is high compared to the total amount of ingredients. High lactose, high pH whey for use according to the present invention typically has a pH of 4.5 - 6.8, such as 4.8 - 6.5, for example 5.0 - 6.0, such as 5.2 - 5.8, e.g. 5.4 - 5.6, such as 5.5. Preferably, the high lactose, high pH whey is unfermented sweet whey having a pH of 6.5 or above.

The content of lactose in the high lactose, high pH whey is related to the pH. Therefore in analogy with the above section, if the amount of whey to be used is small compared to the total amount of ingredients it is usually possible to use high lactose, high pH whey having a lower lactose content than in the case in which the amount of whey to be used is high compared to the total amount of ingredients. The lactose content of the high lactose, high pH whey to be applied in the uses and processes according to the present invention has a lactose content of 1 - 5 %, such as 2 - 4 %, for example 3 % (w/w). Preferably, the high lactose, high pH whey is unfermented sweet whey having a lactose content of 3.5 - 4.0 % (w/w).

The high lactose, high pH whey for use according to the present invention is preferably obtained by the process disclosed in EP 1 278 426. It has been found that using the process according to EP 1 278 426 in the case of the manufacture of e.g. Swiss type cheeses results in obtaining sweet whey as a side product. As no acid forming bacteria are added prior to the separation of the whey the result is that the whey does not contain any acid forming bacteria, and accordingly the whey obtained is stable, unfermented sweet whey which can be stored under aseptic conditions under refrigeration for several days without imparting any properties to the whey which are detrimental to the result in relation to the present invention.

In case the high lactose, high pH whey to be used in the practice of the present invention originates from the traditionally method of making e.g. Swiss type cheeses, mozzarella, cheddar, continental yellow type cheeses, mould cheeses and white cheeses, in which process an acid forming bacteria is used as curdling agent, it is preferred that the whey is used in a state in which essentially no fermentation of the lactose has taking place, i.e. in the form of unfermented sweet whey. Hence it is preferred that the whey obtained from such a process is used right away, or alternatively, the fermentation ability of the acid forming bacteria present may be eliminated as set out below. Alternatively, whey obtained from the cheese making process referred to above may be used as high lactose, high pH whey in which fermentation has occurred to a certain extent as long as essentially not all lactose has been fermented.

It should be noted, that high lactose, high pH whey may also be obtained by simply precipitating the casein in milk by adding an appropriate curdling agent without any interest in saving the precipitating casein with a view to its processing into cheese. In such a process, the curdling agent preferably is a curdling agent imparting no acidic nature to the whey, such as rennet or any other enzyme capable of precipitating the casein proteins without rendering the whey acidic.

In fact, the high lactose, high pH whey for use according to the present invention may be obtained by any conventional or traditional method for obtaining such whey.

It is possible to convert acid whey, i.e. high lactose, low pH whey (obtained from a cheese making process using acid as curdling agent) into a composition matching that of unfermented sweet whey by simply adjusting the pH of the acid whey to a value corresponding the pH of unfermented sweet whey. High lactose, high pH whey obtained from a cheese making process using acid as curdling agent by adjustment of pH will be "stable, high lactose, high pH whey" as no acid forming bacteria which could ferment the lactose is present. Such pH adjustment is preferably performed using alkali metal hydroxide, such as food grade sodium hydroxide.

In case unstable high lactose, high pH whey is the source of whey obtainable in the practice of the present invention it may be worthwhile to contemplate stabilising the whey. Such stabilisation can be effected by bringing the viability of the acid producing bacteria present in the whey to a hold. A preferred method of doing this is to perform a simple thermal treatment of the whey. A low-pasteurisation process of the whey effectively inactivates the acid forming bacteria present. Alternatively, similar effect may be accomplished by subjecting the whey to an ultra or micro filtration step, or by adding acid or other chemicals. Alternatively, the fermentation process may be brought to a hold temporarily by cooling the whey. By converting the unstable, high lactose, high pH whey into stable, high lactose, high pH whey, the constraints imposed by the instability of the whey as to the time available for storage is completely avoided.

Fig. 1 depicts the characteristics of the whey obtained depending on the cheese manufacturing process involved. Fig. 1 illustrates that by using the process according to EP 1 278 426, it is possible to obtain the stable, high lactose, high pH whey directly. Using a conventional cheese making process for the manufacture of e.g. Swiss-type cheeses, in which an acid forming bacteria is used, results in unstable whey having high lactose content and a high pH. Upon standing the acid forming bacteria will turn this whey into the useless low lactose, low pH whey. However, if the unstable, high lactose, high pH whey after its separation is treated thermally or otherwise as set out in the above section, the result will be stable, high lactose, high pH whey. Fig. 1 also shows that using acid as curdling agent results in obtaining high lactose, low pH whey, which upon addition of base can be converted to high lactose, high pH whey.

Standardising

In the conventionally way of standardising milk, the raw milk is separated into a cream fraction and a skim milk fraction. Usually, the fractionation is performed by centrifugating the raw milk, whereby the less dense cream fraction can be collected in the centre of the centrifuge, whereas the more dense, skim milk fraction can be collected near the periphery of the rotating part of the centrifuge. The standardised milk is obtained by adding a fraction of the separated cream to the skim milk. Alternatively, standardised milk may be obtained by batch-wise mixing raw milk with skim milk. By varying the amount of cream or raw milk added to the skim milk a varieties of milk types may be obtained. Typical milk varieties used for consumption by humans are: whole milk (approximately 3.5 % fat), semi-skimmed milk (approximately 1.5 - 1.8 % fat) and skimmed milk (approximately 0.1 % fat).

The present invention relates to a more direct use of whey for the production of dairy products. Accordingly, in one aspect the present invention relates to the use of unfermented sweet whey as an ingredient in the standardisation of a dairy product. Preferably the dairy product is a milk product. In one embodiment according to the use according to the present invention, the use relates to standardisation of a drinking milk, such as whole milk, semi-skimmed milk or skimmed milk. In another embodiment the use relates to standardisation of a milk for use in the production of cheese or yoghurt, ice-cream, chokolate milk etc.

It is preferred, at the high lactose, high pH whey used for standardisation according to the present invention is stable, high lactose, high pH whey. Preferably, the stable, high lactose, high pH whey is unfermented sweet whey.

Thus, according to the use of the high lactose, high pH whey as an ingredient in the standardisation of a milk product according to a preferred embodiment of the present invention, the conventional process steps of standardisation of milk is followed with the exception that part or all of the skim milk used for standardisation is replaced by the high lactose, high pH whey.

The high lactose, high pH whey may be included in the dairy product to be obtained in various amounts. Depending on the other ingredients used and the product desired, and in particular the desired fat content and the protein content in the product, the high lactose, high pH whey may be included in the product in amounts ranging from 0.1 % - 99.9 %. The preferred percentage of the high lactose, high pH whey in relation to the product is 1 - 99 %, such as 2 - 95 %, for example 5 - 90 %, such as 10 - 80%, e.g. 15 - 75 %, such as 20 - 65 %, e.g. 25 - 60 %, such as 30 - 55 %, for example 35 - 50 %, e.g. 40 - 45 % (w/w).

The process for the manufacture of a dairy product

According to one aspect, the present invention relates to a process for the manufacture of a dairy product comprising the steps:

a) obtaining high lactose, high pH whey, in particular from the coagulation of casein in milk;

b) admixing the high lactose, high pH whey obtained in step a) with one or more ingredients comprising: vegetable fat(s), animal fat(s), vegetable prote in(s),animal protein(s) and natural or artificial sweetener(s), such as natural or artificial sugar(s), fruit and fruit juice.

The ingredients comprising vegetable fat(s), animal fat(s), vegetable protein(s), animal protein(s) and natural or artificial sweetener(s), such as natural or artificial sugar(s) may be selcted from the group comprising, raw milk, skimmed milk and/or cream from cow, goat or sheep. It may be rape seed oil, fish oil, palm oil, butter from cow's milk, butter from goat's milk, butter from sheep's milk, soja protein, corn protein, pea protein, erythritol, xylitol, aspartam, saccharin, tagatose, lactose, sugar from sugar canes, sugar from sugar beet, corn syrup, malt sirup.

Furthermore, colouring substance(s), aroma substance(s), flavouring agent(s), enzyme(s), mineral(s), salt(s), colouring agent(s), colour retension agent(s), acidity regulator(s), adjuvant(s), anti-foaming agent(s), anti-oxidant(s), emulsifyer(s), flavour enhancer(s), gelling agent(s), preservative(s), stabiliser(s), thickening agent(s) etc. may be admixed with the high lactose, high pH whey according to the process of the present invention. A few examples of such additional ingredients are: beta-carotene, annatto, carthamus, calcium carbonat, titanium dioxide, enzymes, such as lactase and other carbohydrate active enzymes, lipases, proteases, peptidases of animal, plant or microbiological origin, minerals, such as calcium, iron, sodium, salts, such as NaCl, calcium phosphate, vitamins, such as fat soluble and/or water soluble vitamins.

The core of the present invention is to use liquid high lactose, high pH whey as an ingredient in the preparation of a dairy product. In the process according to the invention, the high lactose, high pH whey obtained from curdling of casein is mixed with other ingredients comprising inter alia proteins, fat and/or mineral.

A preferred embodiment according to the present invention relates to a process for the preparation of a milk like product. This process involved the admixing of liquid high lactose, high pH whey with other ingredients so as to obtain a product which has the appearance and organoleptic properties of milk, e.g. whole milk, semi-skimmed milk or skimmed milk.

In order to obtain such a milk product, the liquid high lactose, high pH whey may be admixed with cream, raw milk, raw milk which has been standardized so as to contain a predetermined fat percentage, skimmed milk, water or skimmed milk powder or any combination of these. The liquid high lactose, high pH whey may admixed in various amounts.

In one preferred embodiment according to the process according to the present invention, step b) above comprises: admixing high lactose, high pH whey obtained in step a) with cream. This embodiment accordingly corresponds to a process for the standardisation of milk by mixing high lactose, high pH whey with cream. It is clear that due to the fact that whey has a lower protein content than skimmed milk (because the casein has been removed during the formation of the whey), the milk obtained by substituting all skimmed milk with high lactose, high pH whey will result in a milk having a lower protein content than the corresponding traditionally milk comprising a mixture of cream and skimmed milk. Therefore, in a special embodiment according to this process, additionally skim milk is admixed. Alternatively or additionally also skimmed milk powder may be added in order to increase the protein content.

In another preferred embodiment according to the process according to the present invention, step b) above comprises: admixing the high lactose, high pH whey obtained in step a) with raw milk. This embodiment accordingly corresponds to a process for the standardisation of milk by mixing high lactose, high pH whey with raw milk. In a special embodiment according to this process, additionally skim milk is admixed. Alternatively or additionally also skimmed milk powder may be added in order to increase the protein content.

In yet another preferred embodiment according to the process according to the present invention, step b) above comprises: admixing the high lactose, high pH whey obtained in step a) with milk which has been standardised so as to contain a predetermined percentage of fat. This embodiment accordingly corresponds to a process for the standardisation of milk by mixing high lactose, high pH whey with standardised milk. In a special embodiment according to this process, additionally skim milk is admixed. Alternatively or additionally also skimmed milk powder may be added in order to increase the protein content.

The above processes of mixing the high lactose, high pH whey with other ingredients may be performed as a batch-wise or as a continuous process. If necessary, water can be added as well.

In one embodiment according to the process according to the present invention the high lactose, high pH whey is obtained from a cheese manufacturing process involving separating off the whey prior to any addition of acid forming bacterial culture. Such process is disclosed in EP 1 278 426.

In another embodiment according to the process according to the present invention the the high lactose, high pH whey is obtained by conversion of high lactose, low pH whey by addition of base, such as an alkalimetal hydroxide, e.g. sodium hydroxide.

Preferably, the pH of the high lactose, high, pH whey is 4.5 - 6.8, such as 4.8 - 6.5, for example 5.0 - 6.0, such as 5.2 - 5.8, e.g. 5.4 - 5.6, such as 5.5.

Preferably, the lactose content of the high lactose, high pH whey is 1 - 5 %, such as 2 - 4 %, for example approximately 3 % (w/w).

It is preferred that the high lactose, high pH whey is stable, high lactose, high pH whey.

In some cases, in particular in cases in which the product obtained by the use or by the method according to the invention has a relatively low protein content it may be advantageous to subject the sugars present in the product to the action of the enzyme beta-galactosidase. This enzyme is responsible for cleaving lactose into its constituents galactose and glucose. By doing this it is possible to impart more sweetness into the final product which in some instances will compensate for lacking organoleptic properties, such as mouth feel, which are due to a low protein content. The action of beta-galactosidase may be imparted to the whey prior to its mixing or to the product obtained after mixing the whey with the other ingredients, and it may be performed e.g. by adding droplets containing beta-galactosidase, or the liquid to be treated may be contacted with a carrier having beta-galactosidase immobilized on it.

If the milk obtained by the process according to the present invention is to be used as a starting material for the production of cheese or yoghurt, the product may turn out to have casein content which is too low. This is in particular the case when the milk product contains a relative high amount of high lactose, high pH whey (which does not contribute to the casein content of the milk product). Hence, in such a case, it may be preferred to increase the casein content of the milk by means of adding casein, e.g. casein salt, such as sodium caseinate during the process of making the milk product.

Preferably, the process according to the present invention includes a pasteurisation step. In one embodiment according to the present invention, the pasteurisation is a low pasteurisation (72 degrees Celcius for 15 seconds). Alternatively, a high pasteurisation (85 degrees Celcius for 30 seconds), or an UHT treatment (135 degrees Celcius for 1 second) or event a sterilisation (115 degrees Celcius for 12 - 15 min.) may be applied.

In a special embodiment and in particular in cases in which the fat content of the milk product is relatively high, it is preferred to subject the milk product to a homogenisation.

Accordingly, the use and the process according to the present invention provides a way in which whey, which in itself contains valuable constituents, can be used for consumption. Furthermore, the use and the process according to the present invention is advantageous in that a dairy - which as mentioned in the introduction encounters a surplus of cream due to the public demand of low fat products - in the present use and the present process may find a way of turning this cream into valuable dairy product by admixing it with high lactose, high pH whey.

The dairy product according to the present invention

One aspect of the present invention relates to a dairy product in the form of a milk product obtainable according to the process according to the process mentioned above. The product according to the present invention is characterised in that the content of casein in relation to the total amount of proteins present is reduced in relation to conventionally and/or traditionally milk products.

The proteins of milk, in particular cow's milk comprises approximately 80 % casein and 20 % whey proteins (i.e. protein other than casein). By substituting at least part of the ingredients conventionally used for making dairy products, such as milk (e.g. whole milk, semi-skimmed milk and skimmed milk) with high lactose, high pH whey it is possible to lower or even avoid the presence of casein in dairy products.

It is preferred that the amount of casein in relation to the total protein content is 75% or less, such as 70 % or less, such as 65 % or less, for example 60 % or less, such as 55% or less, e.g. 50 % or less, such as 45 % or less, or 40 % or less, for example 35 % or less, or 30 % or less, for example 25 % or less, such as 20 % or less, such as 15 % or less, or 10 % or less, e.g. 5 % or less, e.g. 4 % or less, for example 3 % or less, or 2 % or less, such as 1 % or less or approximately 0 % (w/w).

A preferred product according to the present invention is a product for use as a drinking skimmed milk comprising 0.05 - 1.00 % fat and 0.7 - 4.0 % protein, wherein the amount of casein in relation to the total protein content is as set out above.

Another preferred product according to the present invention is a product for use as a drinking semi-skimmed milk comprising 1.00 - 2.00 % fat and 0.7 - 4.0 % protein, wherein the amount of casein in relation to the total protein content is as set out above.

Yet another preferred product according to the present invention is a product for use as a drinking whole milk comprising 3.00 - 6.00 % fat and 0.7 - 5.0 % protein, wherein the amount of casein in relation to the total protein content is as set out above.

The product according to the present invention additionally comprising one or more of: lactose, water, Vitamin A, Vitamin D, Vitamin E, Vitamin B1, Vitamin B2, Vitamin B12, Vitamin C, and/or one or more of the following elements in elemental, ionic or salts form: calcium, magnesium, iron, zinc, iodine and selenium.

The product according to the present invention preferably is one of the above-mentioned and comprising 80 - 98 % water, such 82 - 96 % water, such as 84 - 94 % water, for example 86 - 92 % water, such as 88 - 90 % water (w/w) and 2.0 - 5.0 % lactose, such as 2.5 - 4.5 % lactose e.g. 3.0 - 4.0 % lactose, for example approximately 3.5 % lactose (w/w).

When a product having a desired protein content or fat content is to be produced, the amount of ingredients necessary can be calculated from either a fat standardisation or a protein standardisation from the following formulas (1) - (4) :

$$((1-X) * \text{fat-}\%_{\text{dilutent}}) + X * \text{fat-}\%_{\text{whey}} = \text{fat-}\%_{\text{product}} \qquad (1)$$

$$((1-X) * \text{protein-}\%_{\text{dilutent}}) + X * \text{protein-}\%_{\text{whey}} = \text{protein-}\%_{\text{product}} \qquad (2)$$

Which upon isolation of X gives:

$$X = (\text{fat-}\%_{\text{dilutent}} - \text{fat-}\%_{\text{product}}) / (\text{fat-}\%_{\text{dilutent}} - \text{fat-}\%_{\text{whey}}) \qquad (3)$$

$$X = (\text{protein-}\%_{\text{dilutent}} - \text{protein-}\%_{\text{product}}) / (\text{protein-}\%_{\text{dilutent}} - \text{protein-}\%_{\text{whey}}) \qquad (4)$$

wherein:

X is the percentage of high lactose, high pH whey contained in the product;

fat-$\%_{\text{dilutent}}$ is the content of fat in the material with which the high lactose, high pH whey is to be mixed, expressed as a percentage;

fat-$\%_{\text{whey}}$ is the content of fat in the high lactose, high pH whey used, expressed as a percentage;

fat-$\%_{\text{product}}$ is the content of fat in the product, expressed as a percentage;

protein-$\%_{\text{dilutent}}$ is the content of protein in the material with which the high lactose, high pH whey is to be mixed, expressed as a percentage;

protein-$\%_{\text{whey}}$ is the content of protein in the high lactose, high pH whey used, expressed as a percentage;

protein-$\%_{\text{product}}$ is the content of fat in the product, expressed as a percentage.

The product obtained by the process and use according to the present invention has a higher ratio of whey proteins:casein compared to conventional dairy products. This is advantageous in that casein is generally accepted as being of lower bioavailability to humans compared to whey proteins. Furthermore, it is a fact that the diet of humans in the western world generally provides for proteins in excess of the recommended amount. Hence, the products of the present invention may have a reduced protein content and an increased bioavailability to humans.

Further processing of the product

One aspect according to the present invention relates to uses of a dairy product according to the present invention for the manufacture of a further processed dairy product. Such a further processed product may be selected from yoghurts, cheeses, ice-creams, chocolate milks etc. The methods for producing such further products follows the conventionally and/or traditionally ways of making such products with the exception that at least part of the dairy products used as a starting material according to said conventional and/or traditional method is substituted with a dairy product according to the present invention. A person skilled in the art will have the ability to make such products. Reference is made to the textbook "Dairy Processing Handbook", Tetra Pak Pro-seeing Systems AB, S-221 86 Lund, Sweden.

**Examples**

In the examples presented below, the high lactose, high pH whey originates from a cheese production using lactic acid forming bacteria as curdling agent. The whey was sieved and centrifugated whereafter it was subjected to a pasteurisation so as to render the whey stable. The whey was stored at 5 degrees Celcius.

**Example 1 - Preparation of a milk-like product made from standardised milk and high lactose, high pH whey**

This example illustrates the preparation of milk-like products having a standardised protein content of 3.5% and varying fat content corresponding to whole milk, semi-skimmed milk and skim milk respectively.

Danish Jersey milk having a fat content of 5.5 % and a protein content of 4 % and stable, high lactose, high pH whey are used as starting ingredients. The whey contains approximately 20% of the total protein content of the Jersey milk (approximately 8 g/litre) and approximately 0.05% fat.

In order to determine the amount of whey necessary in the standardisation in order to obtain a product having a protein content of 3.5 %, equation (4) above is used is used:

$$X = (\text{protein-\%}_{\text{dilutent}} - \text{protein-\%}_{\text{product}}) / (\text{protein-\%}_{\text{dilutent}} - \text{protein-\%}_{\text{whey}}) =>$$

$$X = (4.0 - 3.5) / 4.0 - 0.8) => X = 0.15625.$$

Hence in order to obtain a product having a desired protein content of 3.5%, 15.625 % of the product has to be whey.

In order to obtain a product having a desired fat content corresponding to that of whole milk, semi-skimmed milk and skim milk respectively, it is necessary to standardise (or make a fat adjustment of) the Jersey milk used.

Rearranging equation (1) above gives:

$$((1-X) * \text{fat-\%}_{\text{dilutent}}) + X * \text{fat-\%}_{\text{whey}} = \text{fat-\%}_{\text{product}} =>$$

$$\text{fat-\%}_{\text{dilutent}} = (\text{fat-\%}_{\text{product}} - X * \text{fat-\%}_{\text{whey}}) / (1-X).$$

In respect of skimmed milk, fat-%$_{\text{product}}$ is 0.1 %. Substituting into the equation given above gives:

$$\text{fat-\%}_{\text{dilutent}} = (\text{fat-\%}_{\text{product}} - (X * \text{fat-\%}_{\text{whey}})) / (1-X) =>$$

$$\text{fat-\%}_{\text{dilutent}} = (0,1 - (0.15625 * 0.05) / (1-0.15625) =>$$

$$\text{fat-\%}_{\text{dilutent}} = 0.109\%.$$

Accordingly, in order to obtain a skim milk like product having a protein content of 3.5% and a fat content of 0.1 %, the Jeysey milk has to be standardised so as to contain 0.109% fat, and this standardised milk has to be mixed with 15.625 % high lactose, high pH whey in relation to the amount of product.

Performing the corresponding calculations in respect of semi-skimmed milk and whole milk gives the following result:

Semi-skimmed milk (fat content = 1.5%): The Jeysey milk have to be standardised so as to contain 1.68 % fat, and this standardised Jersey milk has to be mixed with 15.625 % high lactose, high pH whey in relation to the amount of product.

Whole milk: (fat content = 3.5%): The Jeysey milk have to be standardised so as to contain 4.05 % fat, and this standardised Jersey milk has to be mixed with 15.625 % high lactose, high pH whey in relation to the amount of product.

Procedure

The raw Jersey milk is fed to a centrifuge, which results in a cream fraction and a skim milk fraction. The skim milk fraction is adjusted in respect of fat content in by adding cream in accordance with the above section. This results in a standardised Jersey milk which is stirred together with the whey in a mixing tank. After blending, the product is low-pasteurised and homogenised.

All three products (whole milk, semi-skimmed milk and skim milk) have the appearance and taste of milk. Organoleptic tests reveal that the products cannot be distinguished from ordinary standardised whole milk, semi-skimmed milk or skim milk respectively.

**Example 2 - Preparation of a milk-like product made from raw milk and high lactose, high pH whey**

This example illustrates the preparation of milk-like products having a low protein content and varying fat content corresponding to whole milk, semi-skimmed milk and skim milk respectively. The product are obtained by mixing high lactose, high pH whey and raw Jersey milk. Danish Jersey milk having a fat content of 5.5 % and a protein content of 4% and stable, high lactose, high pH whey are used as starting ingredients. The whey contains approximately 20% of the total protein content of the Jersey milk (approximately 8 g/litre) and approximately 0.05% fat.

Using equation (3)

$$X = (\text{fat-\%}_{\text{dilutent}} - \text{fat-\%}_{\text{product}}) / (\text{fat-\%}_{\text{dilutent}} - \text{fat-\%}_{\text{whey}}) \qquad (3)$$

And substituting fat-%$_{\text{dilutent}}$ = 5.5 %; fat-%$_{\text{whey}}$ = 0.05 %; fat-%$_{\text{product}}$ = 3.5 % (whole milk), 1.5 % (semi-skimmed milk) and 0.1 % (skimmed milk), gives the ratio X in respect of to whole milk, semi-skimmed milk and skim milk respectively:

Whole milk: X = 0.367
Semi-skimmed milk: X = 0.734
Skim milk: X = 0.991.

Hence, in order to obtain the whole milk like product, the Jersey milk has to be mixed with high lactose, high pH whey in an amount of 36.7 % in relation to the amount of product, whereas the Jersey milk has to be mixed with high lactose, high pH whey in an amount of 73.5 % in relation to the amount of product in order to obtain a semi-skimmed milk like product. In order to obtain a skimmed milk like product, the high lactose, high pH whey in a ratio of 99.1 % in relation to the amount of product must be mixed with the Jersey milk.

Rearranging equation (4), and isolating protein-%$_{\text{product}}$ gives:

$$\text{protein-\%}_{\text{dilutent}} = (\text{protein-\%}_{\text{product}} - X * \text{protein-\%}_{\text{whey}}) / (1-X) \quad (4) \ =>$$

$$\text{protein-\%}_{\text{product}} = (X * \text{protein-\%}_{\text{whey}}) + (1-X) * \text{protein-\%}_{\text{dilutent}}$$

Accordingly, the whole milk like product will have a protein content of 2.82%, whereas the semi-skim milk like product will have a protein content of 1.65% and the skim milk like product will have a protein content of 0.83%.

Procedure

Jersey milk and high lactose, high pH whey are mixed in a tank and the resulting mixture are subsequently homogenised and pasteurised.

The whole milk product and the semi-skimmed milk product according to this example cannot be distinguished from ordinary milk when judged on the appearance alone. The whole milk product tastes good with no distinguishable features compared to ordinary whole milk. The semi-skimmed milk tastes good, but has a mouth feel of a slightly less full bodied product when compared to ordinary semi-skimmed milk. The skimmed milk like product according to this example appears slightly more grey in colour when compared to ordinary skimmed milk and clearly lacks the full sweetness and mouthfeel of ordinary skimmed milk.

**Example 3 - Preparation of a whole milk-like product made from cream and high lactose, high pH whey**

This example illustrates the preparation of a whole milk-like product having a low protein content and a fat content corresponding to whole milk (3.5 % fat). The product is obtained by mixing high lactose, high pH whey and cream made from Jersey milk. The cream has fat content of approximately 37 % and a protein content of approximately 0.7 %.

The stable, high lactose, high pH whey contains approximately 20% of the total protein content of the Jersey milk (approximately 8 g/litre) and approximately 0.05% fat.

Using equation (3) above and substituting the appropriate numbers reveals that the amount of of high lactose, high pH whey must amount to 90.7 % of the product. This corresponds to a protein content of the product of 0.79 %.

Procedure

The whole milk like product is made by mixing the high lactose, high pH whey with cream in a mixing tank. Subsequently, the product is homogenised and pasteurised.

The whole milk like product has the appearance of whole milk. The tast is good, although in terms of palatibility parameters the product gives the impression of a less full-bodied product.

**Example 4 - Preparation of a milk-like product made from cream and high lactose, high pH whey which has been treated with beta-galatosidase**

In order to improve the the mouth feel of the product according to example 3, this example is repeated with the exception that the high lactose, high pH whey used has been pretreated by adding approximately 2 ml (the prescribed dosis) of beta-galactosidase per liter whey to the whey pooling tank and allowing this enzyme to exert its action for 2 hours at 30 - 35 degrees Celcius.

The whole milk like product obtained according to this example clearly exhibits a more full-bodied mouth feel and sweet taste as compared to the milk like product according to example 3.

**Example 5 - Preparation of a whole milk-like product made from cream and high lactose, high pH whey and skimmed milk powder**

This example illustrates the preparation of a whole milk-like product having a protein and a fat content corresponding to whole milk (3.5 % fat and 3.5 % protein). The product is obtained by mixing high lactose, high pH whey, cream made from Jersey milk and skimmed milk powder.

The amounts of cream and high lactose, high pH whey as used in example 3 is used in this example. Additionally, in order to boost the protein content, also 0.0302 kg skim milk powder (having a protein content of 95 %) is included per litre product.

Procedure

The whole milk product is produced by adding the skimmed milk powder to the whey at a temperature of approximately 30 - 40 degrees Celcius. In order to make sure that the powder is thoroughly mixed, interval mixing is used (i.e. periods of successively mixing followed by resting). When the whey and the skim milk powder is sufficiently mixed the fat standardisation is performed by feeding the centrifuge with the whey/skim milk powder mixture and admixing the cream. Following this, the product is homogenised and pasteurised.

The whole milk-like product has a protein content of approximately 3.5 % and a fat content of approximately 3.5 %.

The whole milk-like product has the appearance of an ordinary whole milk, and the taste and mouth fell is good without any distinguishable tastes present compared to ordinary whole milk.

**Example 6 - Preparation of a milk-like product for use in cheese manufacture made from cream and high lactose, high pH whey and sodium caseinate**

This example illustrates the preparation of a milk-like product having a fat content of 3.5 % and a protein content of 3.5 % for use in the manufacture of cheese. The product is obtained by mixing high lactose, high pH whey, cream made from Jersey milk and sodium caseinate.

Procedure

The procedure of example 5 is followed with the exception that the skim milk powder is replaced with 0.0313 kg sodium caseinate pr. liter product. The milk obtained is pasteurised and used directly for cheese production.

**Example 7 - Preparation of a milk-like product for use in yoghurt manufacture made from cream, high lactose, high pH whey, whey powder and sodium caseinate**

This example illustrates the preparation of a whole milk-like product having a protein content of 6 % and a fat content of 3.5 %. The product is obtained by mixing high lactose, high pH whey, cream made from Jersey milk, sodium caseinate and whey powder (WPC).

Procedure

The procedure of example 5 is followed with the execption that the skimmed milk powder is replaced with 0.01313 kg sodium caseinate pr. liter product and 0.05125 kg WPC (80% protein content) per liter product. The milk obtained is homogenised and high-pasteurised and used for yoghurt production.

**Claims**

1. Use of liquid high lactose, high pH whey as an ingredient in the standardisation of a dairy product.

2. Use according to claim 1 for standardisation of milk.

3. Use according to claim 2 wherein the milk originates from a cow, a goat, a sheep, a yak, a (water) buffalo, or a camel.

4. Use according to claim 3, wherein the high lactose, high pH whey is stable, high lactose, high pH whey.

5. Use according to any of the claims 1- 4, wherein the high lactose, high pH whey is stable, unfermented sweet whey.

6. Use according to claim 5, wherein the high lactose, high pH whey is obtained from a cheese manufacturing process involving separating off the whey prior to any addition of acid forming bacterial culture.

7. Use according to any of the preceding claims, wherein the pH of the high lactose, high, pH whey is 4.5 - 6.8, such as 4.8 - 6.5, for example 5.0 - 6.0, such as 5.2 - 5.8, e.g. 5.4 - 5.6, such as 5.5.

8. Use according to any of the preceding claims, wherein the lactose content of the high lactose, high pH whey is 1 - 5 %, such as 2 - 4 %, for example approximately 3 % (w/w).

9. Use according to claim 2, wherein the milk is a drinking milk, such as whole milk, semi-skimmed milk or skimmed milk; or a milk for use in the production of cheese, yoghurt, ice-cream, chocolate milk etc.

10. A process for the manufacture of a dairy product comprising the steps:

   a) obtaining liquid high lactose, high pH whey, in particular from the coagu lation of casein in milk;
   b) admixing the high lactose, high pH whey obtained in step a) with one or more ingredients comprising: vegetable fat(s), animal fat(s), vegetable prote in(s), animal protein(s) and natural or artificial sweetener(s), such as natural or artificial sugar(s), fruit and fruit juice.

11. A process according to claim 10, wherein step b) further comprises admixing the high lactose, high pH whey obtained in step a) with one or more ingredients comprising: colouring substance(s), aroma substance(s), flavouring agent(s), enzyme(s), mineral(s), salt(s), colouring agent(s), colour retension agent(s), acidity regulator(s), adjuvant(s), anti-foaming agent(s), anti-oxidant(s), emulsifyer(s), flavour enhancer(s), gelling agent(s), preservative(s), stabiliser(s), thickening agent(s) etc.

12. A process according to claim 10 or 11 for the standardisation of milk, comprising the steps:

   a) obtaining liquid high lactose, high pH whey, in particular from the coagu lation of casein in milk;
   b) admixing the high lactose, high pH whey obtained in step a) with cream.

13. A process according to claim 10 or 11 for the standardisation of milk, comprising the steps:

   a) obtaining liquid high lactose, high pH whey, in particular from the coagu lation of casein in milk;
   b) admixing the high lactose, high pH whey obtained in step a) with milk.

14. A process according to to claim 13, wherein the milk used in step b) is raw milk or a standardised milk.

15. A process according to claim 10 - 14, wherein the process is a batch-type process.

16. A process according to claim 10 - 14, wherein the process is a continuous process.

17. A process according to any of the claims 12 - 16, wherein step b) additionally comprises the admixing of skimmed milk, skimmed milk powder and/or water.

18. A process according to any of the claims 12 - 17 further comprising addition of casein.

19. A process according to any of the claims 10 - 18, wherein the milk originates from a cow, a goat, a sheep, a yak, a water buffalo, or a camel.

20. A process according to any of the claims 10 - 19 further comprising a homogenisation step and/or a pasteurisation step.

21. A process according to any of the claims 10 - 20, wherein the high lactose, high pH whey is stable, high lactose, high pH whey.

22. A process according to claim 21, wherein the high lactose, high pH whey is obtained from a cheese manufacturing process involving separating off the whey prior to any addition of acid forming bacterial culture.

23. A process according to any of the claims 10 - 21, wherein the the high lactose, high pH whey is obtained by conversion of high lactose, low pH whey by addition of base, such as an alkalimetal hydroxide, e.g. sodium hydroxide.

24. A process according to any of the claims 10 - 23, wherein the pH of the high lactose, high, pH whey is 4.5 - 6.8, such as 4.8 - 6.5, for example 5.0 - 6.0, such as 5.2 - 5.8, e.g. 5.4 - 5.6, such as 5.5.

25. A process according to any of the claims 10 - 24, wherein the lactose content of the high lactose, high pH whey is 1 - 5 %, such as 2 - 4 %, for example approximately 3 % (w/w).

26. A process according to any of the claims 10 - 25, wherein at least part of the lactose present in either the high lactose, low pH whey used as ingredient or in the product obtained is subjected to the action of beta-galactosidase in order to cleave the disaccharide bond of lactose.

27. A dairy product in the form of a milk product obtainable according to the process of any of the claims 10 - 26, wherein the content of casein in relation to the total amount of proteins present is reduced in relation to conventionally and/or traditionally milk products.

28. A dairy product according to claim 27, wherein the amount of casein in relation to the total protein content is 75% or less, such as 70 % or less, such as 65 % or less, for example 60 % or less, such as 55 % or less, e.g. 50 % or less, such as 45 % or less, or 40 % or less, for example 35 % or less, or 30 % or less, for example 25 % or less, such as 20 % or less, such as 15 % or less, or 10 % or less, e.g. 5 % or less, e.g. 4 % or less, for example 3 % or less, or 2 % or less, such as 1 % or less or approximately 0 % (w/w).

29. A dairy product according to claim 28 for use as a drinking skim milk comprising 0.05 - 1.00 % fat and 0.7 - 4.0 % protein.

30. A dairy product according to claim 28 for use as a drinking semi-skimmed milk comprising 1.00 - 2.00 % fat and 0.7 - 4.0 % protein.

31. A dairy product according to claim 28 for use as a drinking whole milk comprising 3.00 - 6.00 % fat and 0.7 - 5.0 % protein.

32. A product according to any of the claims 27 -31 additionally comprising on or more of: lactose, water, Vitamin A, Vitamin D, Vitamin E, Vitamin B1, Vitamin B2, Vitamin B12, Vitamin C, and/or one or more of the following elements in elemental, ionic or salts form: calcium, magnesium, iron, zinc, iodine and selenium.

33. A product according to claim any of the claims 27 - 32 comprising 80 - 98 % water, such 82 - 96 % water, such as 84 - 94 % water, for example 86 - 92 % water, such as 88 - 90 % water (w/w) and 2.0 - 5.0 % lactose, such as 2.5 - 4.5 % lactose e.g. 3.0 - 4.0 % lactose, for example approximately 3.5 % lactose (w/w).

34. Use of a dairy product according to any of the claims 27 - 33 for the manufacture of a further processed dairy product.

35. Use according to claim 34, wherein the further processed dairy product is yoghurt, cheese, ice-cream, chocolate milk etc.

36. A dairy product manufactured by further processing of a product according to any of the claims 27 - 33.

37. A dairy product according to claim 36 in the form of a yoghurt, a cheese, an ice-cream, a chocolate milk etc

## Fig. 1 - Types of whey depending on method of manufacture

| Process for the manufacture of Swiss type cheeses according to EP 1278426 | Traditional Swiss type cheesemaking process using acid forming bacteria as curdling agent | Process for the manufacture of cheese using acid as curdling agent |

heat or other inactivation

Unstable, high lactose, high pH whey

self-fermentation

Low lactose, low pH whey

Stable high lactose, high pH whey ⟵ base ⟵ High lactose, low pH whey

EP 1 894 470 A1

**European Patent Office** — EUROPEAN SEARCH REPORT

Application Number

EP 06 01 8499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RATTRAY W ET AL: "Freezing point and sensory quality of skim milk as affected by addition of ultrafiltration permeates for protein standardization" INTERNATIONAL DAIRY JOURNAL, vol. 6, no. 6, 1996, pages 569-579, XP002421595 ISSN: 0958-6946 * page 570 - page 571 * * page 573 - page 574 * * page 576 - page 577 * ----- | 1-11, 13-17, 19-22, 24,25, 27-37 | INV. A23C9/15 A23C21/06 A23C21/04 A23C11/00 |
| X | GB 993 719 A (NESTLE SA) 2 June 1965 (1965-06-02)  * page 1, line 35 - line 64 * * page 1, line 78 - page 3, line 6 * * page 3, line 80 - line 85; claims 1-12; example 1 * ----- | 1-17, 19-25, 27-37 | |
| X | HABIBI NAJAFI ET AL: "D17: Effects of Sweet Whey on the Properties of Vanilla Soft Serve Ice Milk" JOURNAL OF DAIRY SCIENCE, vol. 82, no. suppl.1, 1999, page 5, XP002421596  * abstract * ----- | 1-5,7, 9-11, 13-15, 19-21, 24,27, 28,32, 34-37 | **TECHNICAL FIELDS SEARCHED (IPC)** A23C |
| X | US 3 873 751 A (ARNDT ROBERT H) 25 March 1975 (1975-03-25)    * column 2, line 47 - column 3, line 36 * * column 6, line 50 - line 63; examples 1-6 * ----- | 10,15, 16, 19-21, 27-29, 32,34-37 | |

-/--

The present search report has been drawn up for all claims

| Place of search | Date of completion of the search | Examiner |
|---|---|---|
| Munich | 26 February 2007 | Krajewski, Doris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 06 01 8499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/110159 A (HUMELCO LUX AG [LU]; HUETING ULCO [BE]) 23 December 2004 (2004-12-23) <br><br> * page 3, line 1 - line 17 * <br> * page 4, line 3 - page 6, line 2 * <br> * page 7, line 24 - page 12, line 24 * <br> * claims 1-24; examples 1-3 * <br> ----- | 10,11, 15-17, 19-22, 24-37 | |
| X | WO 96/08155 A (NEW ZEALAND DAIRY BOARD [NZ]; BHASKAR GANUGAPATI VIJAYA [NZ]; SMITH JO) 21 March 1996 (1996-03-21) <br><br> * page 16, line 27 - page 19, line 4; claims 26,27,55,56 * <br> ----- | 1-17, 19-21, 24,25, 27-37 | |
| A | RATTRAY W ET AL,: "Protein standardization of milk and dairy products." TRENDS IN FOOD SCIENCE & TECHNOLOGY, vol. 7, no. 7, 1996, page 227, XP002421597 * the whole document * <br> ----- | 1-37 | |
| A | DATABASE FSTA [Online] INTERNATIONAL FOOD INFORMATION SERVICE (IFIS), FRANkFURT-MAIN, DE; PATROVSKY J ET AL: "Production of long-life cream." XP002421939 Database accession no. 91-1-11-v0089 * abstract * & CZECHOSLOVAK PATENT CS 268 613, 1990, <br> ----- | 12 | TECHNICAL FIELDS SEARCHED (IPC) |

The present search report has been drawn up for all claims

| Place of search | Date of completion of the search | Examiner |
|---|---|---|
| Munich | 26 February 2007 | Krajewski, Doris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 01 8499

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2007

| Patent document cited in search report | | Publication date | Patent family member(s) | | Publication date |
|---|---|---|---|---|---|
| GB 993719 | A | 02-06-1965 | CH | 398281 A | 31-08-1965 |
| US 3873751 | A | 25-03-1975 | NONE | | |
| WO 2004110159 | A | 23-12-2004 | EP | 1638406 A1 | 29-03-2006 |
| | | | NL | 1023689 C2 | 21-12-2004 |
| WO 9608155 | A | 21-03-1996 | AU | 700748 B2 | 14-01-1999 |
| | | | AU | 3487595 A | 29-03-1996 |
| | | | EP | 0788313 A1 | 13-08-1997 |
| | | | HU | 77043 A2 | 02-03-1998 |

EPO FORM P0459

For more details about this annex : see Official Journal of the European Patent Office, No. 12/82

**EP 1 894 470 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1278426 A
- US 3642493 A
- US 4397927 A